(19) Europäisches Patentamt
European Patent Office
Office européen des brevets

(11) **EP 2 046 554 B1**

(12) **EUROPÄISCHE PATENTSCHRIFT**

(45) Veröffentlichungstag und Bekanntmachung des Hinweises auf die Patenterteilung:
**09.09.2015 Patentblatt 2015/37**

(51) Int Cl.:
***B29C 45/50*** *(2006.01)* ***B29C 45/74*** *(2006.01)*
***B29C 45/76*** *(2006.01)*

(21) Anmeldenummer: **07787377.6**

(22) Anmeldetag: **11.07.2007**

(86) Internationale Anmeldenummer:
**PCT/EP2007/057104**

(87) Internationale Veröffentlichungsnummer:
**WO 2008/015084 (07.02.2008 Gazette 2008/06)**

(54) **EINSPRITZEINHEIT**

INJECTION UNIT

UNITÉ D'INJECTION

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **03.08.2006 DE 102006036267**

(43) Veröffentlichungstag der Anmeldung:
**15.04.2009 Patentblatt 2009/16**

(73) Patentinhaber: **Sumitomo (SHI) Demag Plastics Machinery GmbH**
**90571 Schwaig (DE)**

(72) Erfinder: **GRUNITZ, Otto**
**90451 Nürnberg (DE)**

(74) Vertreter: **Hübner, Gerd et al**
**Rau, Schneck & Hübner**
**Patentanwälte Rechtsanwälte PartGmbB**
**Königstrasse 2**
**90402 Nürnberg (DE)**

(56) Entgegenhaltungen:
**DE-A1- 10 059 307     DE-C1- 10 222 748**
**JP-A- 5 345 337       JP-A- 8 039 631**
**US-A- 4 540 359**

**Beschreibung**

Die vorliegende Erfindung betrifft eine Einspritzeinheit für eine Kunststoff-Spritzgießmaschine.

Aus dem Stand der Technik ist bekannt, dass ein ein- oder mehrstofflich zusammengesetztes Kunststoffgranulat in einer Einspritzeinheit aufbereitet bzw. verarbeitungsfertig erschmolzen und unter einem Druck von bis zu 2000 bar in ein in einer Schließeinheit angeordnetes Werkzeug eingespritzt wird. Kernstück einer Einspritzeinheit ist eine Schneckenwelle bzw. Schnecke, die drehbar in einem Schneckenzylinder angeordnet ist, wobei ein Außendurchmesser der Schneckenwelle im Wesentlichen einem Innendurchmesser des Schneckenzylinders entspricht. Bei der Verarbeitung von thermoplastischen Kunststoffen wird in der Regel eine sogenannte Dreizonenschnecke verwendet. Durch diese einstückig ausgebildete Schneckenwelle wird das Fördergut vom Kunststoffgranulat-Einzug von einem mit zu verarbeitendem Kunststoffgranulat gefüllten Trichter in einem hinteren Bereich des Schneckenzylinders, dem sogenannten Füllblock, in eine nächste Zone, die sogenannte Kompressionszone, gefördert, wo der Kunststoff plastifiziert und verdichtet sowie entgast wird. Von einem ersten Antrieb gedreht, rotiert die Schneckenwelle im Schneckenzylinder und transportiert das Granulat vorwärts. Durch innere Reibung und/oder externe Erwärmung über am Schneckenzylinder angeordnete Heizbänder wird das Granulat erschmolzen, entgast und plastifiziert. Die Schmelze wird dann in einer sog. Meteringszone homogenisiert und schließlich durch eine Rückstromsperre innerhalb des Schneckenzylinders vor die Schneckenwelle gedrückt. Dabei bewegt sich die Schneckenwelle als Folge des zunehmenden internen Staudrucks im Schneckenzylinder axial nach hinten, wobei unter Aufrechterhaltung des Staudrucks keine Formmasse aus der Spitze der Einspritzeinheit herausfließt. An der Spitze des Schneckenzylinders befindet sich eine Düse, die einen Übergang von der Einspritzeinheit zum Werkzeug darstellt.

In dem im Folgenden betrachteten Fall eines diskontinuierlich arbeitenden Spritzgussverfahrens werden feste Arbeitszyklen von grundsätzlich gleichem Aufbau und Überwachung durch eine Steuereinheit wiederholt durchlaufen. Zu Beginn eines jeden Arbeitszyklus muss in der Einspritzeinheit im Bereich der Spitze des Schneckenzylinders ein vorbestimmtes Volumen an homogenisierter Formmasse zur Verfügung stehen. Zunächst wird das Werkzeug durch die Schließeinheit geschlossen und die Einspritzeinheit über einen motorischen Antrieb an das Werkzeug herangefahren. Danach wird die Formmasse unter Beaufschlagung mit dem sogenannten Spritzdruck in das Werkzeug eingespritzt. Nach einer ca. 90 - 98%igen Teilfüllung innerhalb des Werkzeuges wird bei erheblicher Druckabsenkung in der Einspritzeinheit von Spritzdruck auf den sogenannten Nachdruck innerhalb von nur ca. 50 ms bis etwa 100 ms umgeschaltet. Dabei muss im Schneckenzylinder noch ein sogenanntes Restmassenpolster vorhanden sein, um den Druck auf die in das Werkzeug eingespritzte Masse auswirken zu können und um zudem einen durch Abkühlung im Werkzeug hervorgerufenen Volumenschwund ausgleichen zu können. Die Rückstromsperre verhindert beim Einspritzen und Nachdrücken der verarbeitungsfertigen Formmasse, dass das Massenvolumen von einem Bereich vor der Schnecke zurück in die Schneckengänge fließt. So fungiert die Schneckenwelle im Schneckenzylinder als Kolben, der in axialer Richtung durch einen weiteren separaten Antrieb bewegt wird.

Je nach Ausführungsform weisen Einspritzeinheiten der vorstehend beschriebenen Art drei und mehr Antriebseinheiten auf, wobei die elektromotorischen Antriebseinheiten jeweils unter Einsatz eigener Frequenzumsetzerschaltungen angesteuert werden. Dabei weisen bekannte Maschinen sehr große bewegte Massen auf, die bei schnellen Drehzahl- und/oder Druckwechseln unter entsprechend hohem, zusätzlichem Energieaufwand durch zusätzliche Einrichtungen abgebremst werden müssen.

Der nächstkommende Stand der Technik ist aus DE 100 59 307 A1 bekannt. Diese Druckschrift offenbart eine Antriebsvorrichtung zum Ausführen zweier Arbeitsschritte in einer Kunststoffspritzgießmaschine mit den Merkmalen des Oberbegriffs des Patentanspruches 1.

Zum technologischen Hintergrund ist ferner die DE 102 22 748 C1 zu nennen, aus der eine Einspritzeinheit für eine Spritzgießmaschine mit den im Oberbegriff des Anspruches 1 angegebenen Schritten des Spritzguss-Arbeitszyklus hervorgeht.

Die JP 5 345 37 A zeigt eine elektrisch angetriebene Spritzgießmaschine, bei der der Läufer des Motors als Hohlwelle mit jeweils endseitig angeordneten Kupplungen ausgebildet ist. Eine Spindel ist zur wahlweisen axialen bzw. rotatorischen Kraftübertragung verschieblich gelagert.

Aufgabe der vorliegenden Erfindung ist es daher, eine Einspritzeinheit der eingangs genannten Art unter Verbesserung ihres Wirkungsgrades weiterzubilden.

Diese Aufgabe wird durch die Merkmale des unabhängigen Anspruchs gelöst. Vorteilhafte Weiterbildungen sind Gegenstand der Unteransprüche.

Erfindungsgemäß zeichnet sich eine Einspritzeinheit dadurch aus, dass eine Antriebseinheit der Einspritzeinheit mindestens drei schalt-, steuer- oder regelbare Kupplung zur Ankopplung eines Motors an mindestens ein Funktionselement der Einspritzeinheit aufweist. Erst durch eine erfindungsgemäße Entkopplung einer Antriebseinheit von einer Funktionseinheit innerhalb einer Einspritzeinheit ist eine wesentliche Senkung der Massenträgheit zum schnellen und im Wesentlichen überschwingungsfreien Umschalten von Funktionseinheiten effektiv realisierbar. Daher können in einer erfindungsgemäßen Vorrichtung auch aus dem Stand der Technik bekannte Maßnahmen zum aktiven Abbremsen von Funktionseinheiten reduziert oder sogar ganz gestrichen werden.

Durch die drei schalt-, steuer- oder regelbaren Kupplungen ist eine Trennung zwischen einer Antriebseinheit und der Spindel der Einspritzeinheit vorgesehen. Damit entfällt das bislang vorhandene große Massenträgheitsmoment einer derartigen Anordnung insbesondere beim Abbremsen. In bekannten Vorrichtungen mussten dagegen immer die Motoren mit abgebremst werden, die als Synchron- oder Reluktanzmotoren in den geforderten Leistungsklassen ein erhebliches Gewicht aufweisen. Mithin entfällt in einer erfindungsgemäßen Vorrichtung auch ein wesentlicher Teil, der in bekannten Vorrichtungen eine wesentliche Beschränkung der Dynamik eines Gesamtsystems bewirkt hat.

In einer besonders bevorzugten Ausführungsform der Erfindung weist eine Einspritzeinheit eine Antriebseinheit mit nur noch einem Elektromotor mit zugeordneter elektrischer Versorgungseinheit mit Frequenzumrichtung sowie Kühlung auf. Zur Betätigung aller innerhalb eines Spritzguss-Arbeitszyklus erforderlichen Funktionseinheiten sind drei schaltbare Kupplungen vorgesehen. Schaltbare Kupplungen werden heute in unterschiedlichsten Ausführungsformen in großen Stückzahlen eingesetzt, beispielsweise in Automatikgetrieben. Durch ihre weite Verbreitung sind schaltbare Kupplungen auch mit hohen Anforderungen und langen Standzeiten in der Anschaffung wesentlich preiswerter als Frequenzumsetzer und über diese gespeiste Elektromotoren. Zudem vereinfachen neue Technologien eine Ansteuerung von variablen Kupplungen erheblich.

Die erforderlichen Leistungshalbleiter bzw. IGBT sowie Ansteuereinheiten an dem Elektromotor können so angeordnet werden, dass der Kühlkreislauf von Motor und Leistungsteil gemeinsam genutzt wird. Ein elektrischer Zwischenkreis mit entsprechenden Einschaltdrosseln, Gleichrichtereinrichtungen sowie Pufferkondensatoren befindet sich in einem Schaltschrank unter räumlicher Trennung von den Leistungshalbleitern und der Ansteuerungselektronik. Durch diese räumliche Distanz wird das Problem einer elektromagnetischen Verträglichkeit gemildert. Es wird weiterhin bevorzugt, die Heizbänder aus dem Zwischenkreis zu speisen und so als Bremswiderstände für den elektrischen Antrieb zu nutzen. So sind separate Bremswiderstände oder Rückspeiselösungen überflüssig.

Durch Umsetzung einer erfindungsgemäßen Vorrichtung lassen sich alle Bewegungen bzw. Funktionen einer Antriebseinheit mit nur einem Motor realisieren, wobei die Einsparung weiterer Motoren und zugehöriger Frequenzumsetzer eine erhebliche Kostenreduktion bewirkt. Auch wird eine elektromagnetische Störstrahlung durch effektive Senkung der Anzahl möglicher Störquellen begrenzt.

Schaltbare Kupplungen sind Stand der Technik und werden in vielfältigsten Formen angewendet. In Verbindung mit neuen Technologien sind derartige Elemente wesentlich kostengünstiger als Motore und Frequenzumrichter. Das Design der Kupplungen lässt sich einfach in das Gesamtkonzept einer Einspritzeinheit integrieren.

Durch die Trennung der kunststoffbeeinflussenden Komponenten vom Antrieb, also im Wesentlichen der Schnecke vom Rotor, lassen sich wesentlich geringere Masseträgheitsmomente während der Umschaltphase von Spritzdruck auf Nachdruck realisieren. Damit wird ein Spritzdruckanstieg bei druckabhängiger Umschaltung von Spritzdruck auf Nachdruck vermieden. Hohe negative Druckgradienten sind nur durch das aktive Abbremsen der Spindel und Schnecke möglich, während der Motor langsamer abbremst. Magnetisch gesteuerte Kupplungen reagieren von 0 auf 100 % im Millisekundenbereich. Die vorgeschlagene Lösung ermöglicht die Funktion des schnellen Einspritzens. Auch in diesem Fall wird die Entkopplung von Antrieb, Mutter und Spindel ausgenutzt.

In einem ersten Schritt wird der Motor auf Maximaldrehzahl hochgefahren, die damit speicherbare kinetische Energie wächst mit dem Quadrat der Drehzahl n:

$$W = J/2 * (2 * \pi * n)^2$$

Eine Verdopplung der Drehzahl n bewirkt also eine Vervierfachung der gespeicherten Energie W. Für eine mit schalt-, steuer- oder regelbaren Kupplungen ausgerüstete Maschine sind größere Masseträgheiten ohne den Nachteil geringerer Dynamik also vorteilhaft. In einem zweiten Schritt werden Mutter und Rotor und die Spindel durch Blockierung über eine Kupplung verbunden. Die Spritzenergie wird aus der rotierenden Masse und dem Motor entnommen, der während diesem kurzen Zeitraum von t < 1s mit dreifacher Überlast betrieben werden kann. Werden die Stützkondensatoren im Zwischenkreis in einem Schaltschrank entsprechend dimensioniert, können die Netzrückwirkungen in Form von Spannungseinbrüchen durch Überstrom etc. minimiert oder sogar weitgehend ausgeschlossen werden.

Weitere Merkmale und Vorteile der Erfindung werden nachfolgend unter Beschreibung eines Ausführungsbeispieles mit Bezugnahme auf die Abbildungen der Zeichnung angegeben. In der Zeichnung zeigen:

Figur 1: eine schematisierte Schnittzeichnung einer erfindungsgemäßen Antriebseinheit einer Einspritzeinheit mit einem Elektromotor und drei schaltbaren Kupplungen;

Figur 2: einen skizzierten Schaltkreis zur Staudruckregelung im Schritt der Dosierung;

Figur 3: ein Blockschaltbild zur Darstellung von Zwischenkreis und Kühlung;

Figur 4: eine dreidimensionale Darstellung einer erfindungsgemäßen Einspritzeinheit mit zugehöriger Elektronik und

Figur 5: eine skizzierte Seitenansicht einer Spritzgießmaschine unter Einsatz der Einspritzeinheit von Figur 1.

Nachfolgend werden über die verschiedenen Abbildungen hinweg einheitlich gleiche Bezugsziffern und Bezeichnungen für gleiche Teile, Funktions- oder Baugruppen und Verfahrensschritte verwendet werden.

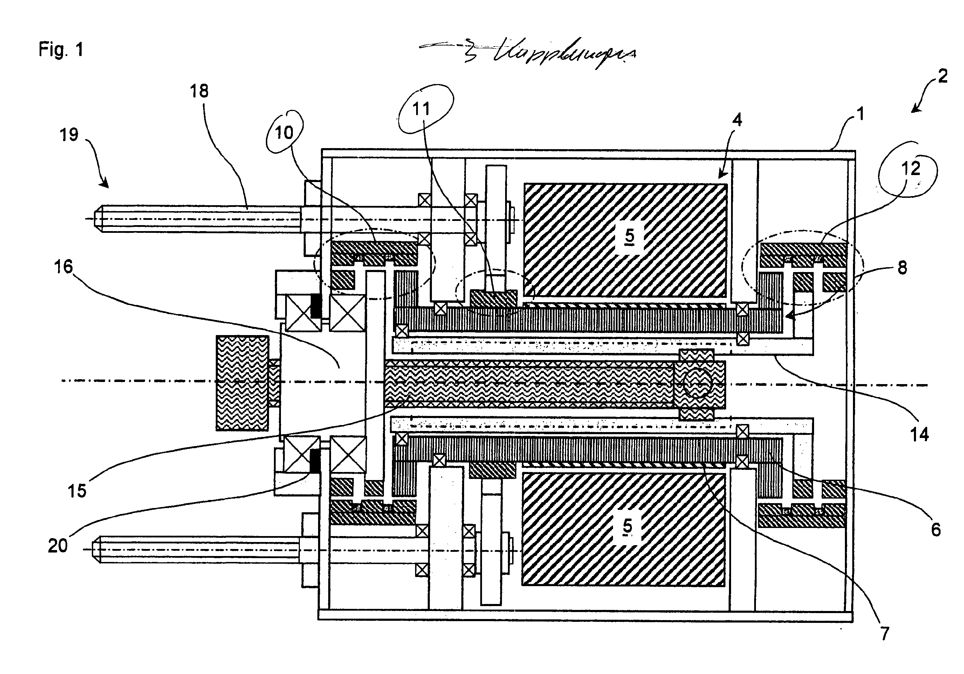

Figur 1 stellt eine schematisierte Schnittzeichnung einer erfindungsgemäßen Antriebseinheit 1 einer Einspritzeinheit 2 dar. Eine durch die Antriebseinheit 1 bewegte Plastifiziereinheit 3 ist aus Gründen der Übersichtlichkeit in der Zeichnung ebenso wenig dargestellt wie eine Schließeinheit mit darin befindlicher Form.

Die Antriebseinheit 1 weist einen als Synchronmaschine ausgebildeten Elektromotor 4 mit einer Statorwicklung 5 und einem als Hohlwelle 6 ausgebildeten und mit Permanentmagneten 7 besetzten Läufer 8. Auf der Hohlwelle 6 sind insgesamt drei schalt- steuer- oder regelbare Kupplungen 10, 11 und 12 angeordnet, über die der Elektromotor 3 als Antriebsmaschine an verschiedene Funktionseinheiten zum Betreiben der Einspritzeinheit 2 zu bestimmten Zeitpunkten innerhalb eines Arbeitszyklus angekoppelt wird. Hierzu ist in der Hohlwelle 6 eine Keilwelle 14 zur axialen Verschiebung auf einer Spindel 15 vorgesehen, wobei die Spindel 15 mit einer Mutter 16 zur Übertragung einer Rotationsbewegung in Eingriff steht. Ferner sind Verfahr- und Haltespindeln 18 einer Düsenanlage 19 vorgesehen, deren Regelung im Zusammenspiel mit Drucksensoren 20 erfolgt, die im Bereich der Mutter 16 angeordnet sind.

Als Teilschritte eines geschlossenen und in dieser Form für jedes Werkstück zu wiederholen sind in einem Arbeitszyklus zu nennen:

Vorbereitung: Schließen der Form durch Schließeinheit;

1. Plastifiziereinheit 3 an eine Form anfahren;
2. Einspritzen mit abschließendem Zurückziehen der Schneckenwelle in der Plastifiziereinheit 3;
3. Dosieren der Formmasse in der Plastifiziereinheit 3;
4. Abfahren der Plastifiziereinheit 3 von der Form;

Abschluss: Öffnen der Form durch Schließeinheit und Entnahme des erstarrten Spritzgutes.

Zu 1. Düsenbewegung als translatorische Bewegung der Düsenanlage 19:

Über die zweite Kupplung 11 werden die Verfahr-Spindeln 18 der Düsenanlage 19 aktiviert. Zur Bewegung der Düsenanlage muss der Motor 4 dagegen in Gegenuhrzeigerrichtung drehen. Die Plastifiziereinheit 3 wird entsprechend an die Form anfahren.

Zu 2. Einspritzen
Die in der Keilwelle 14 gelagerte Spindel 15 wird durch die Nutmutter 16 und die dritte Kupplung 12 blockiert. Dabei wirkt die rechte Seite der Kupplung 12 als Bremse. Der Rotor 8 wird über die erste Kupplung 10 mit der drehbar gelagerten Mutter 16 verbunden. Die Spindel 15 wird durch die Nutmutter 16 und die dritte Kupplung 12 blockiert. Der Motor 4 dreht zum Antrieb der so geschalteten Einheit im Linkslauf.

Zu 3. Dosieren
Zum Dosieren der homogenisierten Formmasse sind die Schneckenwelle der Plastifiziereinheit 3 und die Spindel 15 über die Keilwelle 14 und die Kupplung 12 mit dem Rotor 8 verbunden. Die Mutter 16 ist über die Kupplung 10 mit dem Rotor 8 verbunden. Die Schnecke und die Mutter 16 drehen gegen die Uhrzeigerrichtung zum Dosieren der homogenisierten Formmasse in dem Schneckenzylinder der Plastifiziereinheit 3 mit maximalem Staudruck. Bei konstanter Motordrehzahl und unabhängig von einem angeforderten Moment wird die Drehzahl der Mutter 16 für einen konstant bleibenden Staudruck geregelt. Dabei wird die Größe des Staudrucks von einem Bediener als Sollwert über einen großen Bereich hinweg frei vorgegeben.

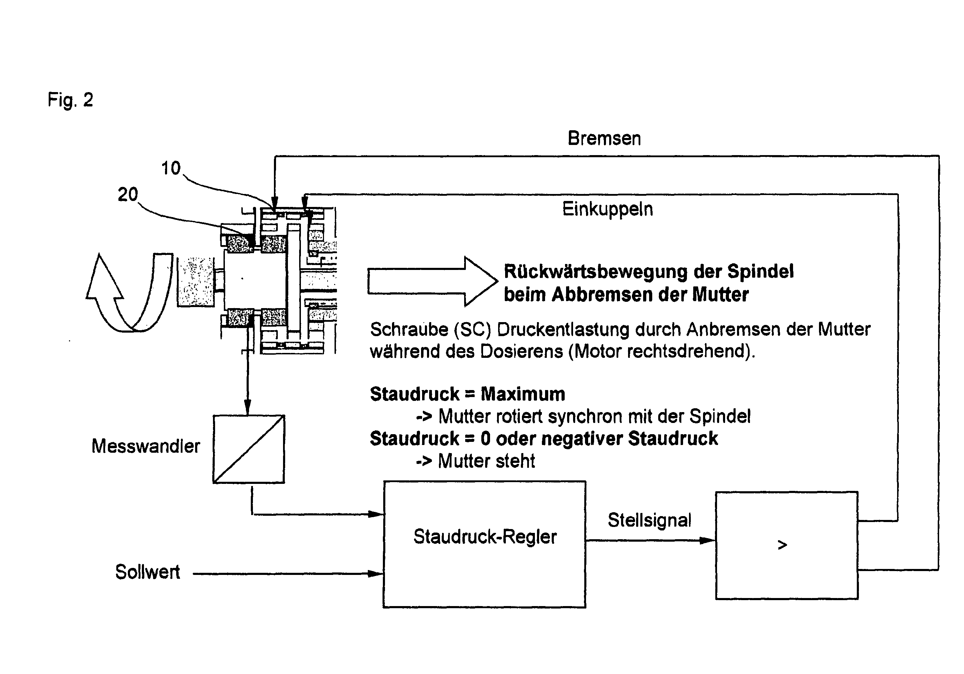

Unter drehender Förderbewegung wird dabei die Schneckenwelle innerhalb des Schneckenzylinders der Plastifiziereinheit 3 zurückbewegt, um Stauraum für die homogenisierte Formmasse zwischen Düse und Rückflusssperre zu schaffen. Die Drehzahl der Mutter 16 wird durch einen geschlossenen Regelkreis stabilisiert, wobei der Staudruck als Sollwert dient und der Drucksensor 20 einen Ist-Wert für einen Regler liefert. Das Stellglied ist die Kupplung 10, wo der Regler zwischen Bremsen und Antrieb hin und her schaltet. Der Motor 4 dreht im Rechtslauf. Dieses Regelverfahren und der zugehörige Regelkreis sind in der Abbildung von Figur 2 schematisch wiedergegeben.

Zu 4. Düsenbewegung zur Düsenanlage, Düsenabhub:

Zum Düsenabhub muss der Motor 4 hingegen in Uhrzeigerrichtung drehen, also im Rechtslauf, wie beim vorangehenden Dosieren.
Bei Düsenabhub werden die beiden Spindeln 18 durch Aktivierung der Kupplung 11 als Zuganker gegenläufig in Drehung versetzt.
Zugleich wird die Schneckenwelle innerhalb der Plastifiziereinheit 3 zurückgezogen, um ein Nachlaufen von Formmasse aus dem Schneckenzylinder heraus zu verhindern.

Mit dem Düsenabhub wird u.a. bezweckt, dass durch eine eingeleitete Abkühlung der Form zur Beschleunigung eines Erstarrens des Werkstücks nicht auch die homogenisierte und als Restpolstermasse im Bereich der Düse der Plastifiziereinheit 3 verbliebene Formmasse erstarrt. Ein Spalt von ca. 2 mm reicht bereits als thermische Isolation aus, um diesen unerwünschten Effekt zu unterbinden. Für einen Wechsel einer Düse an einer Plastifiziereinheit 3 ist jedoch ein Verfahrweg von ca. 200 bis 300 mm erforderlich. Bei derartigen Vorgängen muss ausreichend Platz für einen Werkzeugeinsatz vorhanden sein.

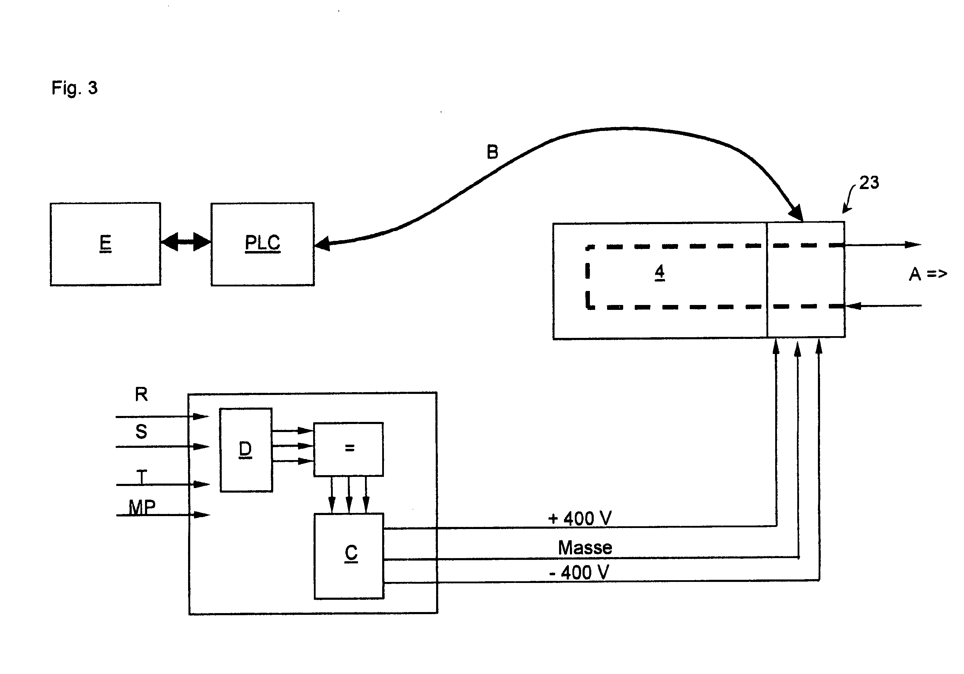

Figur 3 zeigt ein Blockschaltbild zur Darstellung des elektrischen Zwischenkreises und der Kühlung einer Spritzgießmaschine unter Einsatz einer Einspritzeinheit 2 mit einem Antrieb 1 gemäß Figur 1. Die Entkopplung des Antriebsmotors 4 innerhalb der Einheit 1 von den Verfahrenselementen der Spritzgießmaschine durch schalt- oder regelbare Kupplungen 10, 11, 12 macht nur noch den Einsatz eines einzigen Motors 4 erforderlich. Folglich wird auch die Anzahl von Leistungszwischenkreisen und Frequenzumsetzer-Steuerungen mit zugehörigen und in den Leistungshalbleiter-Sätzen verwendeten IGBTs entsprechend reduziert. Eine Programmierung und fortlaufende Steuerung der Spritzgießmaschine wird von einem Eingabe-Terminal E vorgenommen und unter Verwendung einer programmierbaren Logik PLC umgesetzt sowie über einen Bus B an die Steuerelemente weitergeleitet. Die noch erforderlichen IGBTs und die Ansteuereinheit werden an dem Motor 4 so befestigt, dass zum Abtransport einer Verlustwärme A der Kühlkreislauf von Motor 4 und dem im Wesentlichen aus IGBTs und Ansteuerung bestehenden Leistungsteil gemeinsam genutzt wird. Dagegen befindet sich ein mit Drehstrom gespeister Zwischenkreis mit Einschaltdrossel D, Gleichrichtung, Pufferkondensatoren C u.ä. Bauteilen unter räumlicher Trennung vor allem von den IGBTs und der Ansteuerelektronik in einem eigenen Schaltschrank.

Im Gegensatz zu bekannten Spritzgießmaschinen werden die Heizbänder aus dem Zwischenkreis gespeist, also mit Gleichstrom. Diese Maßnahme macht Bremswiderstände, wie sie für den Antrieb in bekannten Vorrichtungen zusätzlich erforderlich sind, oder sonstige Rückspeisungslösungen in der vorliegenden Ausführungsform überflüssig.

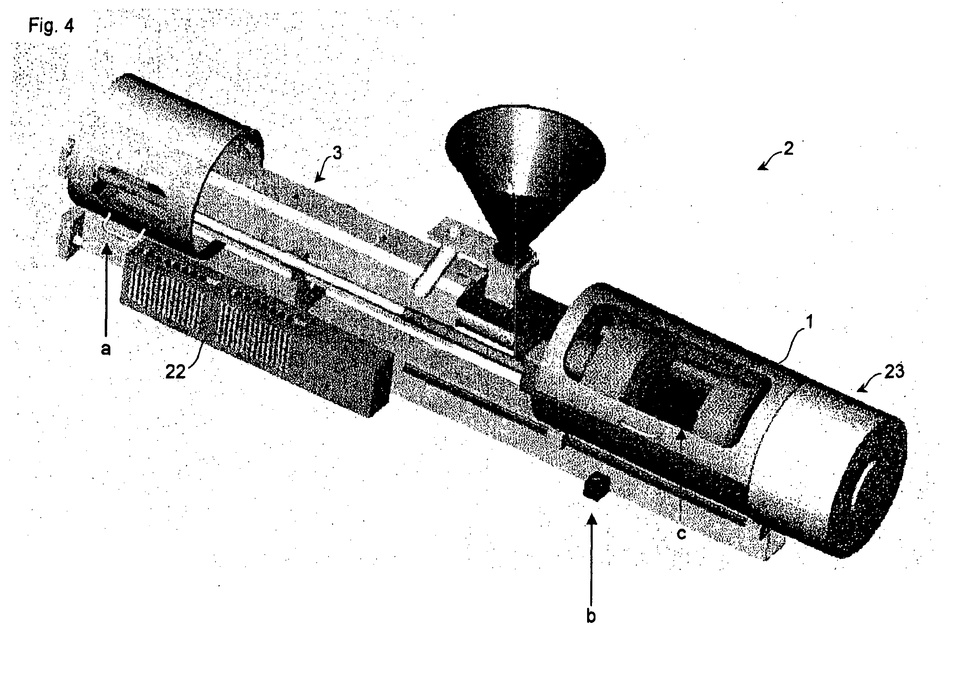

Figur 4 zeigt eine dreidimensionale Darstellung einer erfindungsgemäßen Einspritzeinheit 2 aus Antriebseinheit 1 und Plastifiziereinheit 3 mit zugehöriger Elektronik als Entwurfszeichnung mit Befestigungspunkten a, b, c. Die Elektronik der Plastifiziereinheit 3 ist im Bereich der Plastifiziereinheit 3 angeordnet, die Ansteuerelektronik der Antriebseinheit 1 mit einem Frequenzumrichter auf Basis von IGBTs und Impulsbreitenansteuerung sind hier als komplette Ansteuerung an dem Motor 4 unter Nutzung des gleichen Kühlkreislaufes gefestigt. Der vorgeschlagene Aufbau bewirkt eine Reduzierung der Kühlkreisläufe auf mindestens die Hälfte des momentan bekannten Aufwandes. Der elektrische Zwischenkreis befindet sich davon separiert in einem EMV-sicheren Schaltschrank.

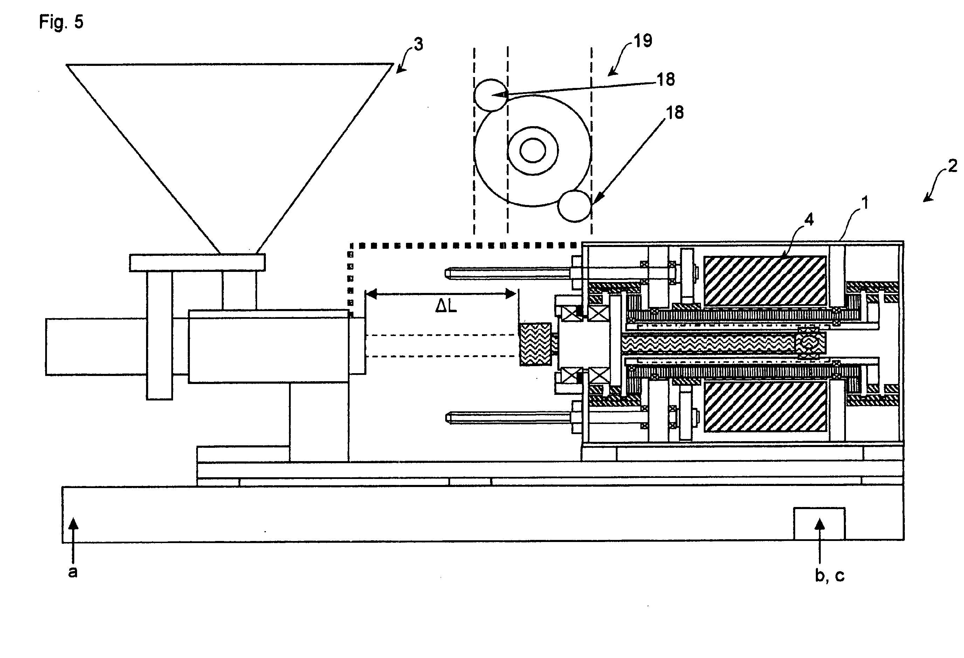

Figur 5 zeigt eine skizzierte Seitenansicht einer vollständigen Spritzgießmaschine unter Einsatz einer Einspritzeinheit 2 mit einem Antrieb 1 gemäß Figur 1. Der dargestellte Aufbau ist auf einer Montageplattform von nur 300 mm Breite realisierbar. Dabei ist der Aufbau von beiden Seiten ohne wesentliche Einschränkungen voll zugänglich.

Bezugszeichenliste

| 1 | Antriebseinheit |
|---|---|
| 2 | Einspritzeinheit |
| 3 | Plastifiziereinheit |
| 4 | Elektromotor |
| 5 | Statorwicklung |
| 6 | Hohlwelle |
| 7 | Permanentmagnet |
| 8 | Läufer / Rotor |
| 9 | |
| 10 | erste Kupplung |
| 11 | zweite Kupplung |
| 12 | dritte Kupplung |
| 13 | |
| 14 | Keilwelle |
| 15 | Spindel |
| 16 | Mutter |
| 17 | |
| 18 | Verfahr- und Haltespindeln |
| 19 | Düsenanlage |
| 20 | Drucksensor |
| 21 | |
| 22 | Elektronik Plastifiziereinheit 3 |
| 23 | Elektronik Antriebseinheit 1 |
| PLC | programmierbare Logik |
| A | Abwärme |
| D | Drossel |
| C | Kondensator-/Glättungseinheit |
| B | Bus |
| E | Eingabe-Terminal |
| a | Befestigungspunkt |
| b | Befestigungspunkt |
| c | Befestigungspunkt |

**Patentansprüche**

1.  Einspritzeinheit für eine Kunststoff-Spritzgießmaschine, wobei eine Antriebseinheit (1) der Einspritzeinheit (2) mindestens drei schalt-, steueroder regelbare Kupplungen (10, 11, 12) zur steuerbaren Ankopplung eines gemeinsamen Motors (4) an Funktionselemente der Einspritzeinheit (2) derart aufweist, dass alle innerhalb eines Spritzguss-Arbeitszyklus mit

- Plastifiziereinheit (3) an eine Form anfahren;
- Einspritzen mit abschließendem Zurückziehen der Schneckenwelle in der Plastifiziereinheit (3);
- Dosieren der Formmasse in der Plastifiziereinheit (3); und
- Abfahren der Plasitiziereinheit (3) von der Form;

erforderlichen Funktionseinheiten betätigbar sind,

**dadurch gekennzeichnet, dass** der Läufer (8) des Motors (4) als Hohlwelle (6) ausgebildet ist mit jeweils den endseitig angeordneten schalt-, steuer- oder regelbaren Kupplungen (10, 11, 12) und

**dass** eine Spindel (15) zur wahlweisen axialen und/oder rotatorischen Kraftübertragung in einer Keilwelle (14) in oder an der Hohlwelle (6) verschieblich gelagert ist.

2. Einspritzeinheit nach Anspruch 1,
**dadurch gekennzeichnet, dass** durch mindestens eine Kupplung (10, 11, 12) eine schalt-, steuer- oder regelbare Trennung zwischen einer Antriebseinheit (1) und der Spindel (15) der Einspritzeinheit (2) vorgesehen ist.

3. Einspritzeinheit nach einem der vorhergehenden Ansprüche,
**dadurch gekennzeichnet, dass** die Einspritzeinheit (2) eine Antriebseinheit (1) mit nur noch einem Elektromotor (4) mit zugeordneter elektrischer Versorgungseinheit mit Frequenzumrichtung sowie Kühlung aufweist.

## Claims

1. Injection unit for a plastic injection moulding machine, wherein
a drive unit (1) of the injection unit (2) comprises at least three switchable, controllable or regulable clutches (10, 11, 12) allowing a common motor (4) to be controllably coupled to functional elements of the injection unit (2) in such a way that all functional units required during an injection moulding working cycle comprising the steps of

- moving a plasticizing unit (3) to a mould;
- injecting and, finally, retracting the screw shaft in the plasticizing unit (3);
- metering the moulding mass in the plasticizing unit (3); and
- removing the plasticizing unit (3) from the mould are actuable,

**characterized in that** the rotor (8) of the motor (4) is configured as a hollow shaft (6), with the switchable, controllable or regulable clutches (10, 11, 12) being in each case arranged at the end thereof, and that a spindle (15) is mounted for displacement in a spline shaft (14) arranged in or at the hollow shaft (6) in such a way as to selectively allow an axial and/or rotational transmission of forces.

2. Injection unit according to claim 1,
**characterized in that** a switchable, controllable or regulable separation is provided between a drive unit (1) and the spindle (15) of the injection unit (2) by means of at least one clutch (10, 11, 12).

3. Injection unit according to one of the preceding claims,
**characterized in that** the injection unit (2) has a drive unit (1) with only one electric motor (4), the electric motor (4) being associated to an electrical supply unit comprising a frequency converter and a cooling system.

## Revendications

1. Unité d'injection pour une presse à injection de matière plastique, dans laquelle une unité d'entraînement (1) de l'unité d'injection (2) comporte au moins trois accouplements (10, 11, 12) pouvant être commandés, contrôlés ou asservis, pour l'accouplement pouvant être contrôlé d'un moteur commun (4) à des éléments de fonctionnement de l'unité d'injection (2) de telle sorte que toutes les unités de fonctionnement nécessaires peuvent être actionnées dans le cadre d'un cycle de travail d'injection avec

- l'arrivée de l'unité de plastification (3) sur un moule ;
- l'injection, avec le retrait consécutif de l'arbre de la vis sans fin, dans l'unité de plastification (3) ;
- le dosage de la masse à mouler dans l'unité de plastification (3) ; et
- le départ de l'unité de plastification (3) du moule ;
**caractérisée en ce que** le rotor (8) du moteur (4) est conçu sous la forme d'un arbre creux (6) avec les accouplements (10, 11, 12) pouvant être commandés, contrôlés ou asservis respectivement disposés aux extrémités, et
**qu**'une broche (15) est logée de façon mobile dans ou sur l'arbre creux (6) pour une transmission de force, selon le choix, axiale et/ou rotationnelle.

2. Unité d'injection selon la revendication 1,
**caractérisée en ce qu**'une séparation pouvant être commandée, contrôlée ou asservie par au moins un accouplement (10, 11, 12) est prévue entre l'unité d'entraînement (1) et la broche (15) de l'unité d' injection (2).

3. Unité d'injection selon l'une des revendications précédentes,
**caractérisée en ce que** l'unité d'injection (2) présente une unité d'entraînement (1) avec uniquement encore un moteur électrique (4) doté d'une unité d'alimentation électrique adjointe avec un convertisseur de fréquence ainsi qu'un système de refroidissement.

Fig. 1

EP 2 046 554 B1

Fig. 2

Bremsen

10

20

Einkuppeln

**Rückwärtsbewegung der Spindel
beim Abbremsen der Mutter**

Schraube (SC) Druckentlastung durch Anbremsen der Mutter
während des Dosierens (Motor rechtsdrehend).

**Staudruck = Maximum**
   -> Mutter rotiert synchron mit der Spindel
**Staudruck = 0 oder negativer Staudruck**
   -> Mutter steht

Messwandler

Staudruck-Regler

Stellsignal

>

Sollwert

EP 2 046 554 B1

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10059307 A1
- DE 10222748 C1
- JP 534537 A